# EUROPEAN PATENT SPECIFICATION

(11) **EP 4 446 096 B1**
(45) Date of publication and mention of the grant of the patent: **03.12.2025**
(21) Application number: 24165098.5
(22) Date of filing: 21.03.2024
(51) Int. Cl.: B29C 65/06, B29C 65/78, B29L 31/30, B29L 31/00

(54) **VIBRATION WELDING GROOVE SYSTEM**
VIBRATIONSSCHWEISSNUTSYSTEM
SYSTÈME DE RAINURE DE SOUDAGE PAR VIBRATION

(30) Priority: 21.03.2023 US 202363491467 P
(43) Date of publication of application: 16.10.2024
(73) Proprietor: Flex-N-Gate Advanced Product Development, LLC, Windsor, ON N9A 5K3 (CA)
(72) Inventor: Foster, Brian, Windsor, N9A 5K3 (CA); Dingess, Jeffrey, Windsor, N9A 5K3 (CA); Yi, Chin, Windsor, N9A 5K3 (CA)
(74) Representative: Dehns Germany Partnerschaft mbB

(56) References cited:
- FR-A1- 2 700 384
- JP-A- 2013 107 227
- US-A1- 2010 277 821

## Description

### BACKGROUND

### 1. FIELD

Embodiments of the invention relate generally to vibration welding, and more specifically to a "tongue and groove" design for improved joining of lighting assembly components via vibration welding.

### 2. RELATED ART

Vibration welding is a known manufacturing process used to join parts together. For example, U.S. Patent No. 6,054,072 to Bentley et al. discloses a tongue and groove interface for bonding a transparent plastic article to an opaque plastic article via infrared radiation. U.S. Patent No. 6,364,513 to Fong et al. discloses a tongue and groove interface for joining a lens to the housing of a lighting device via vibration welding. U.S. Patent No. 8,210,695 to Roth et al. discloses a tongue and groove interface for joining parts of a rearview mirror assembly via vibration welding. U.S. Patent No. 8,393,766 to Pastrick et al. discloses a tongue and groove interface for joining parts of a lighted external mirror assembly using vibration welding. FR 2 700 384 A1 discloses a heat exchanger comprising a heat exchange body including bent tubes and fins, a tube base and a water collector. A liquid-tight connection of the tube base and the water collector is established by vibration welding of these components. To this end, the water collector is set in vibration motion in a longitudinal direction, while being simultaneously acted upon by a pressure directed orthogonally to the surface of the tube base. US 2010/277821 A1 discloses two components, which may be welded by vibration welding. While the first component comprises a curved groove, the second component comprises corresponding tongues. JP 2013 107227 A discloses two components, one having a groove region and the other one having a weld leg.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the invention will be apparent from the following detailed description of the embodiments and the accompanying drawing figures.

In certain aspects, a vibration welding groove system for improved bonding of a first component with a second component via a vibration welding process includes: a first component, including: a joining surface; a groove region, wherein the groove region includes a groove formed in the joining surface; a base region lacking the groove in the joining surface; and a transition region located in the joining surface between the groove region and the base region, wherein the transition region includes a tapering of the groove to provide a smooth transition from the groove region to the base region; and a second component having a weld leg extending from a main body, wherein the groove of the first component includes a shape configured to nudge the weld leg towards a center of the groove during joining of the first component with the second component.

In certain aspects, the groove includes an opening having a width that is larger than a depth of the groove.

In certain aspects, the depth of the groove is greatest at a mid-line of the groove.

In certain aspects, the groove is symmetrical on opposing sides of the mid-line.

In certain aspects, the mid-line of the groove is aligned with a center line of the first component.

In certain aspects, an outer portion of the groove includes a depression configured to provide a catchment for receiving the weld leg.

In certain aspects, the depression is about 0.2-mm below the joining surface.

In certain aspects, the groove includes a hump inside the depression towards the center of the groove, the hump being configured to nudge the weld leg towards a mid-line of the groove.

In certain aspects, the hump is configured to cause a deflection of the weld leg towards the mid-line of the groove.

In certain aspects, the hump is configured to cause a deformation of the weld leg, thereby bending the weld leg towards the mid-line of the groove.

In certain aspects, the base region is configured for connection with a vibration source for transferring high frequency vibrations to the first component during the vibration welding process.

In certain aspects, the groove includes a contour configured to maintain weld flash within the groove.

In certain aspects, the groove includes a contour shaped to receive the weld leg without excessive deformation of the weld leg.

In certain aspects, the groove is configured to direct a misaligned weld leg towards a center of the groove thereby reducing an amount of sacrificial region of the weld leg upon vibrational welding.

In certain aspects, a depth of the groove is about 1.0-mm to about 1.25-mm below the joining surface.

### BRIEF DESCRIPTION OF THE DRAWING FIGURES

Embodiments of the invention are described in detail below with reference to the attached drawing figures, wherein:
FIG. 1A is a three-dimensional perspective view of a portion of a vibration welding groove formed in a component, in an embodiment;
FIG. 1B is a cross-sectional view of the groove taken from the A-A' cross-section location of FIG. 1A;
FIG. 1C is a close-up view of the groove profile of FIG. 1B;
FIG. 1D illustrates an exemplary profile of one side of the groove of FIG. 1B;
FIG. 2A is a cross-sectional view of an exemplary weld leg for use with the vibration welding groove of FIG. 1A;
FIG. 2B is a cross-sectional view of the groove of FIG. 1B;
FIG. 2C is a cross-sectional view of a nominal alignment of the weld leg of FIG. 2A and the groove of FIG. 2B before the vibration welding process;
FIG. 2D is a cross-sectional view of the nominal alignment of the weld leg and the groove during the vibration welding process with a sacrificial region;
FIG. 3A shows the nominal alignment of the weld leg with the groove before the vibration welding process;
FIG. 3B represents a misalignment of the weld leg with the groove by a relatively large amount;
FIG. 3C represents a misalignment of the weld leg with the groove by a smaller amount than that of FIG. 3B;
FIG. 3D shows the nominal alignment of the weld leg with the part during the vibration welding process indicating the sacrificial zone;
FIG. 3E represents a misalignment of the weld leg by 0.5-mm with the groove region during the vibration welding process;
FIG. 3F represents a misalignment of the weld leg misaligned by 1.0-mm with the groove region during the vibration welding process;
FIG. 4 is a cross-sectional view of the groove region, in an embodiment;
FIG. 5 is a top-down view of an exemplary part having a groove facing up, in an embodiment;
FIG. 6A is a cross-sectional view of an exemplary part having a groove being joined by vibration welding with another part having a weld leg; and
FIG. 6B is a cross-sectional view of a joint region of an exemplary assembly after being joined by vibration welding.

The drawing figures do not limit the invention to the specific embodiments disclosed and described herein. The drawings are not necessarily to scale, emphasis instead being placed upon clearly illustrating the principles of the invention.

### DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. Other embodiments can be utilized, and changes can be made without departing from the scope of the invention. The following detailed description is, therefore, not to be taken in a limiting sense. The scope of the invention is defined only by the appended claims, along with the full scope of the equivalents to which such claims are entitled.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the technology can include a variety of combinations and/or integrations of the embodiments described herein.

Vibration welding is a welding process that uses high-frequency mechanical vibrations to generate heat and melt the surfaces of two plastic parts to form a bond. The vibration causes friction at the interface between the surfaces of the parts, creating heat sufficient to partially melt the parts along the interface. The melted parts are allowed to cool and solidify, forming a strong, homogeneous bond. Vibration welding can be used to join parts of various sizes, such as automotive interiors and housings for electronic devices, and is valued for its high production rates, reliability, and low cost. Vibration welding is primarily used to join thermoplastic materials, such as polypropylene (PP), polyethylene (PE), acrylonitrile butadiene styrene (ABS), polycarbonate (PC), and others. The choice of material will depend on the specific requirements of the application, including the desired mechanical properties, dimensional stability, and chemical resistance. In addition, the material must have a sufficient melt viscosity and flow behavior to allow for the formation of a consistent and uniform bond. Other factors, such as the size and geometry of the parts, production rates, and cost considerations, will also influence the choice of material for vibration welding.

Embodiments disclosed herein encompass intricate designs that may be incorporated into any number of devices, including but not limited to a lighting assembly for vehicles. Embodiments include advanced vibration welding technology and a unique "tongue and groove" design that accommodates tolerance variations in the dimensional specifications of the individual components, thereby ensuring consistent and reliable final assemblies.

For purposes of description herein, the terms "upper," "lower," "right," "left," "rear," "front," "vertical," "horizontal," "top," "bottom," and derivatives thereof shall be in reference to the orientation of the embodiment as shown in the accompanying figure. However, it is to be understood that the invention may assume various alternative orientations, except where expressly specified to the contrary. It is also to be understood that the specific device illustrated in the attached drawings and described in the following specification is simply an exemplary embodiment of the inventive concepts defined in the appended claims. Hence, specific dimensions, proportions, and other physical characteristics relating to the embodiment disclosed herein are not to be considered as limiting, unless the claims expressly state otherwise.

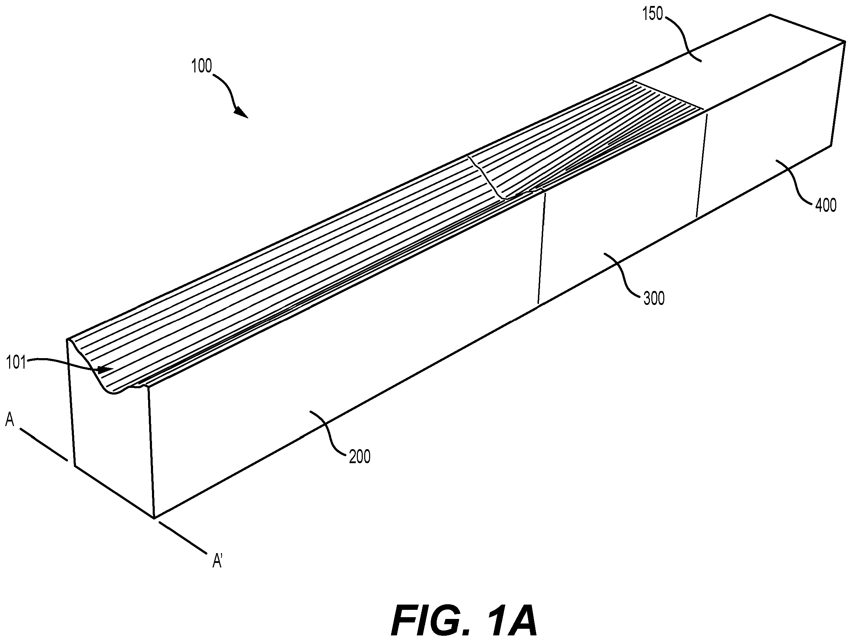

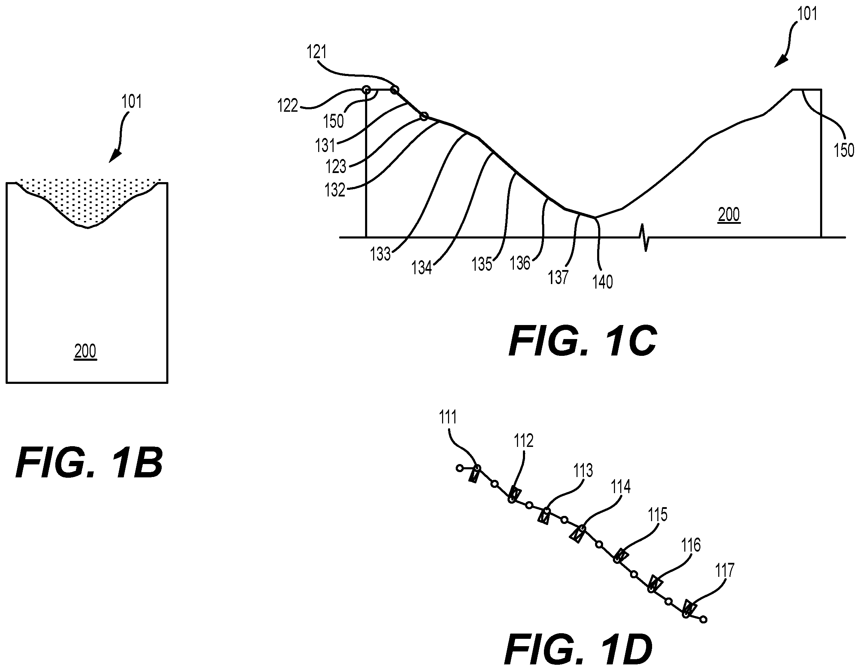

FIG. 1A, FIG. 1B, and FIG. 1C show a component 100 of a vibration welding groove system as viewed from different perspectives and are best viewed together with the following description.

FIG. 1A illustrates a representative three-dimensional perspective view of the component 100 having a groove 101, comprising three regions: a groove region 200, a transition region 300, and a base region 400. In one embodiment as illustrated in FIG. 1A, the three regions are seamlessly joined together. In embodiments, regions 200, 300, and 400 may be formed from a single piece of material. The groove region 200 comprises a groove 101 formed in a surface and is specifically designed to serve as a vibration welding surface configured to receive a weld leg and to guide the weld leg during a vibration welding process. The shape of the groove 101 is configured to compensate for part variation by assisting with alignment of two parts being welded together, as further described below. The transition region 300 provides a smooth transition between the groove region 200 and the base region 400. A top surface 150 exists outside of groove 101. Top surface 150 is for example a joining surface to be joined with another part. Base region 400 includes top surface 150 lacking the groove 101. In embodiments, top surface 150 is a flat surface; however, other features besides the groove may be present in or on top surface 150 without departing from the scope hereof. In embodiments, the base region 400 is connected to a vibration source for transferring high frequency vibrations during the welding process.

FIG. 1B is a cross-sectional view of the groove region 200 taken from the A-A' cross-section location of FIG. 1A. As illustrated in FIG. 1B, the groove 101 is indicated by a dotted area. In embodiments, the component 100 is manufactured by injection molding such that the groove 101 is designed into an injection molded tooling to form the groove 101 during the injection molding process as known to one of skill in the art of plastics manufacturing. In certain embodiments, the groove 101 may alternatively be extruded from the component 100 at the groove region 200 and the transition region 300. In embodiments, an opening of the groove 101 comprises a width that is larger than a depth of the groove 101. A depth of the groove 101 is greatest at the mid-line (i.e., the middle) of the groove 101, which may in embodiments be aligned with a center line of the component 100.

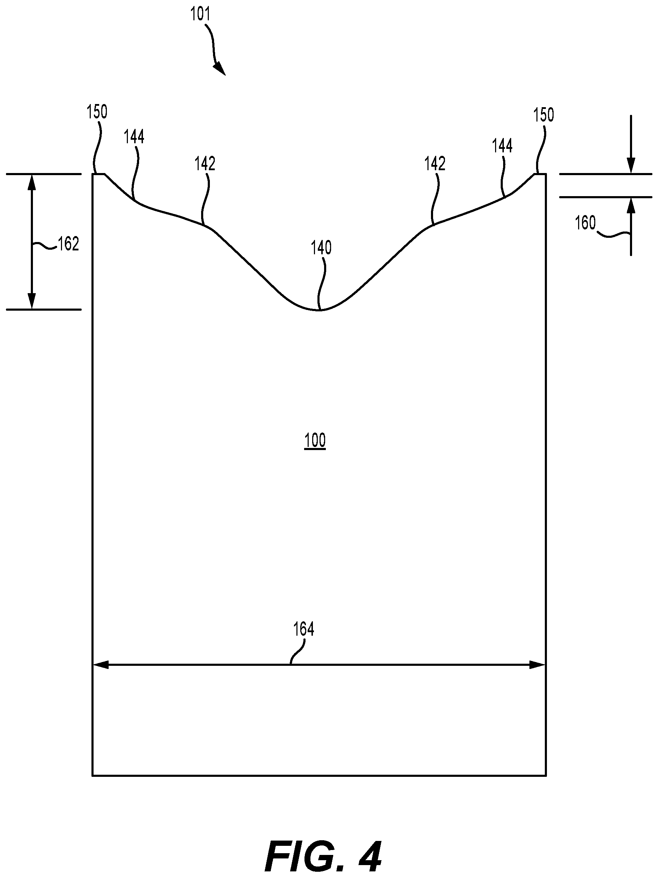

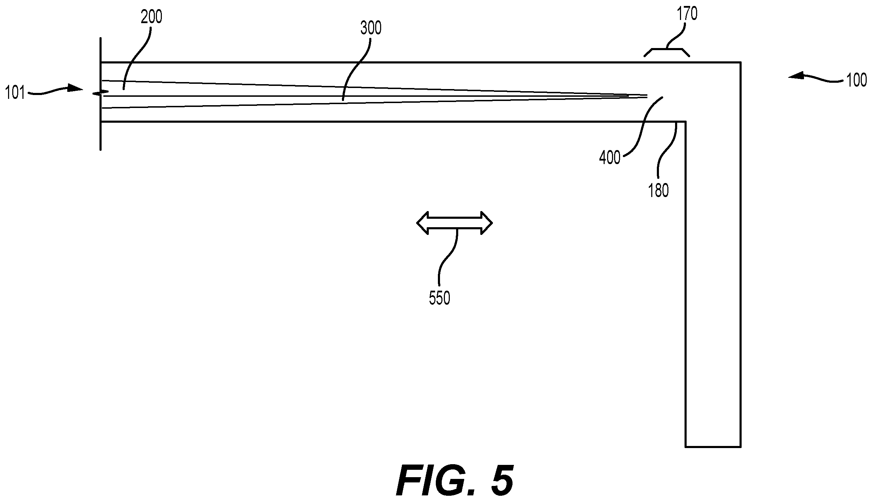

FIG. 1C is a close-up view of the groove 101 from FIG. 1B at the groove region 200. Top surface 150 exists outside the groove 101 between an outer corner 122 and an inner corner 121 within the groove region 200. In embodiments, the top surface 150 in the transition region 300 may expands as the groove 101 tapers until it ends (see FIG. 5) or the top surface may match that of the groove region (see FIG. 1A). In the base region 400, the groove is absent and the top surface 150 extends across to both sides of the component 100. In embodiments, the slope of the groove is symmetrical on opposing sides of the groove mid-line and ascends symmetrically from a bottom portion 140 upwards to the top surface 150. A vertex 123 shown in FIG. 1C indicates a location at which the angle of the slope changes forming a depression as further described below in connection with FIG. 4.

The groove 101 comprises a series of segments 131, 132, 133, 134, 135, 136, and 137, which are contiguous segments that form a profile as best viewed from the cross-sectional close-up view of FIG. 1C. In embodiments, segments 131-137 descend continuously from the inner corner 121 to the bottom portion 140 at a bottom of the groove 101. The bottom portion 140 spans the bottom of the groove 101 along the groove mid-line. The groove 101 provides a sweeping entry for a weld leg of another part to be guided into the bottom portion 140 under clamping pressure applied between the two parts. Each segment, 131 to 137, of the groove region 200 may be independently selected from, but not limited to, a variety of different shapes, including straight lines, elliptical lines, circular lines, parabolic lines, or a combination of these shapes.

FIG. 1D illustrates an exemplary profile of one side of groove 101 having a variety of angles 111, 112, 113, 114, 115, 116, and 117, which are the joint angles between adjacent segments 131-137 of the groove 101. In embodiments, the angles 111-117 are independently selected to be between 90-degrees (i.e., vertical) and 180-degrees (i.e., horizontal). The design specifications for the groove 101 shape may be varied greatly, including the number of segments, the length of each segment, the shape of each segment, and the angles formed between adjacent segments, based on various factors such as the intended application, material characteristics, and fabrication limitations. The illustrated segments in FIG. 1C show the features of the groove 101 at cross-section A-A' of FIG. 1A; however, other portions of the groove 101 may have different profiles (i.e., different angles 111-117 and/or different segments 131-137) and may be designed independently, based on various factors such as the intended application, material characteristics, and fabrication limitations. For example, in the transition region 300, the profile of the groove varies continuously to form a smooth transition between the groove region 200 and the base region 400 that lacks any groove in top surface 150; therefore, the segments become shorter and the angles between the segments vary through the transition region 300 compared to the groove region 200.

The contour of the groove 101 is designed to direct the weld leg to the optimal dimensionally controlled position, maintain weld flash for a visually appealing appearance, and, in the event that the final assembly fails to meet dimensional specifications, provide a welding surface without excessively straining the weld leg 500, as would occur with a straight or more pronounced slope. Weld flash refers to the excess material that results from a welding process and is left on the welded parts after they have cooled and solidified. It is often considered a cosmetic issue, as it can detract from the appearance of the welded components, but it may also have functional implications, as it can interfere with the proper fit and function of the welded parts. In some embodiments, weld flash may be trimmed or removed, either manually or through a secondary manufacturing process, to improve the appearance or functionality of the finished product. The shape of the groove 101 is further described below in connection with FIG. 4.

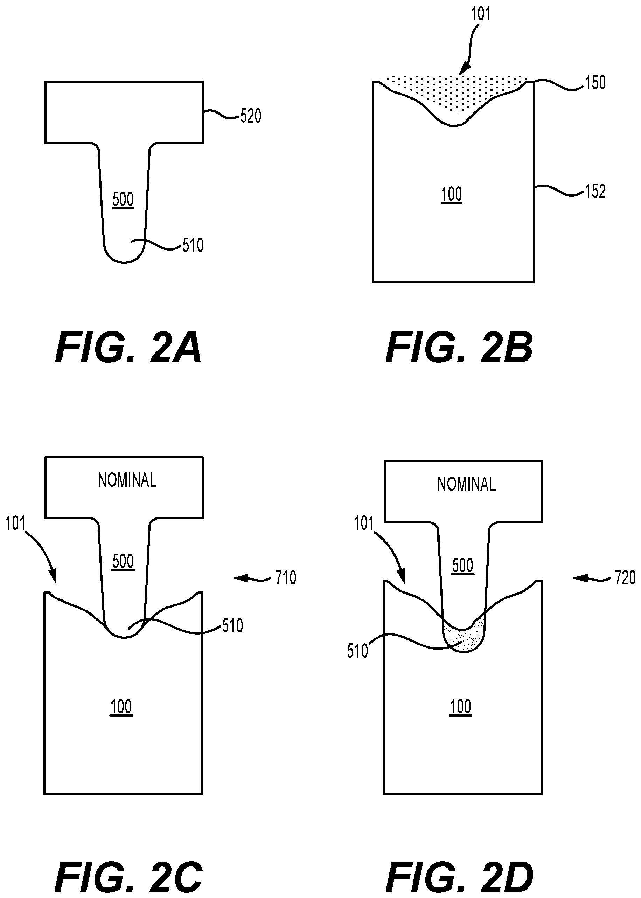

FIG. 2A is a cross-sectional view of a weld leg 500 extending from a component 520. Component 520 is a separate component (e.g., a second component) configured for bonding with first component 100. Component 520 may be coupled to other components for welding into an assembly. A tip of the weld leg 500, located at its distal end from component 520, forms a sacrificial region 510. The sacrificial region 510 provides material that is melted for bonding the two parts together (e.g., during vibrational welding).

FIG. 2B is a cross-sectional view of the component 100 at the groove region 200. The groove 101 formed in a main body 152 of component 100 and is indicated in FIG. 2B by a dotted area between opposing sides of top surface 150.

FIG. 2C is a cross-sectional view of a nominal alignment 710 in which the weld leg 500 is nominally aligned with the component 100 before the vibration welding process in the nominal alignment 710. The sacrificial region 510 is centered in the lowest portion of the groove 101, as depicted in FIG. 2C.

FIG. 2D is a cross-sectional view of a nominal alignment 720 of the weld leg 500 nominally aligned during the vibration welding process. The sacrificial region 510, shown in FIG. 2D as an overlap area, indicates the portion of material that is melted during vibrational welding.

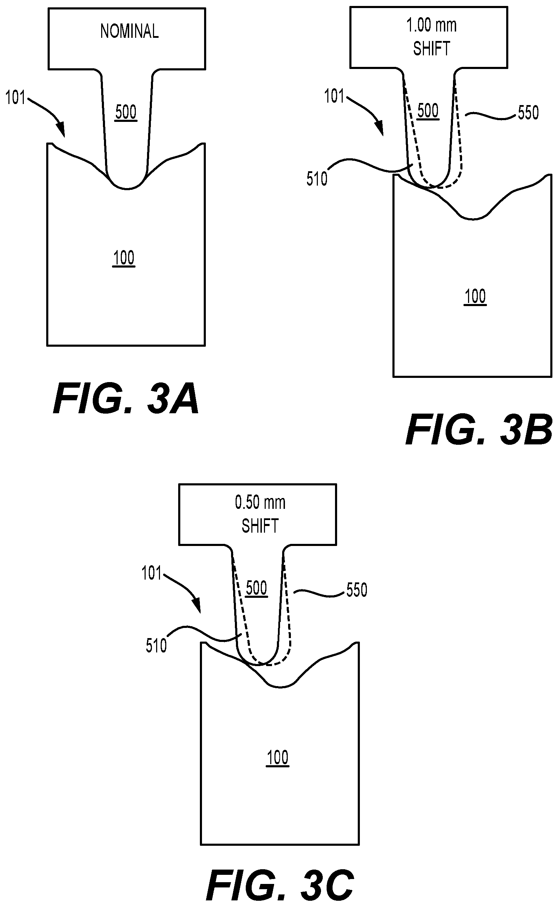

FIGs. 3A to 3D show cross-sectional views of the component 100 and the weld leg 500 in either nominal or misaligned positions.

FIG. 3A shows the nominal alignment of the weld leg 500 with the component 100 prior to the vibration welding process. FIG. 3B shows the weld leg 500 misaligned (e.g., by 1.00-mm) from the mid-line or center of groove 101. As the weld leg 500 is brought into contact with the groove 101, the weld leg is deflected (as represented in dashed lines in FIG. 3B) and deformed towards the center of the groove 101. FIG. 3C shows the weld leg 500 misaligned by 0.50-mm from the center of groove 101. Again, the weld leg is deflected (as represented in dashed lines in FIG. 3C) and deformed towards the center of the groove 101. The groove 101 is shaped with a contour that receives the weld leg without excessive deformation of the weld leg.

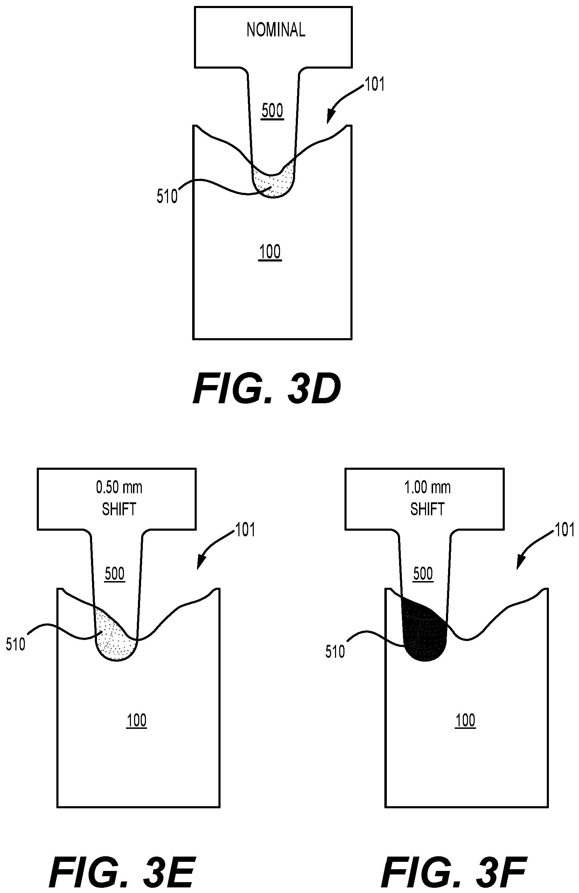

FIG. 3D shows the nominal alignment of the weld leg 500 with the sacrificial region 510 below the groove 101 indicating the portion of weld leg 500 that is melted during the vibration welding process. FIG. 3E shows the sacrificial region 510 for a 0.5-mm misalignment, and FIG. 3F shows the sacrificial region 510 for a 1.0-mm misalignment. Comparison of the sacrificial region 510 among FIG. 3D, FIG. 3E, and FIG. 3F illustrates how the size of the sacrificial region 510 increases with increased misalignment. The increase in the size of the sacrificial region 510 due to misalignment causes an increase in melted material during the welding process. Too much melted material in the groove 101 may cause a buildup of excess material that hardens around the weld line (i.e., causes excess flash). By shaping the contour of the groove 101 to displace and/or deform (i.e., bend) the weld leg 500 towards the bottom portion 140 of the groove 101, the groove 101 is configured to direct a misaligned weld leg 500 towards a center of the groove thereby reducing an amount of sacrificial region 510 of the weld leg upon vibrational welding. Reducing the amount of sacrificial region 510 improves the bond formed between components and reduces excess weld flash.

Misalignment may be caused by tolerance variation in the parts to be welded, or from the alignment process, or a combination of both. Misalignment may lead to faulty weld lines which may result in a weakened or failed weld.

The design of the groove 101 provides an improvement for bonding parts together via vibrational welding despite tolerance variations among the parts.

FIG. 4 is the cross-sectional view of the component 100, in an embodiment. The groove 101 may comprise various features designed to improve alignment of the weld leg 500. Between the bottom portion 140 and top surface 150, a hump 142 and a depression 144 may be formed by the undulating shape of the groove 101. Hump 142 serves to nudge the weld leg 500 towards the bottom portion 140 for smaller misalignments, either causing a displacement or deformation of the weld leg 500 toward the mid-line of the groove 101, or a combination of both displacement and deformation. Depression 144 serves to cast a wider catchment for the weld leg 500 when larger misalignments occur. The depression 144 is located at outer portions of the groove 101 adjacent the top surface 150 on both sides of the groove 101; the hump 142 is located on both sides of the groove 101 inside of the depression 144 towards the center of the groove 101 (i.e., between the depression 144 and the bottom portion 140). A distance 160 is the distance between the top surface 150 and the depression 144. In embodiments having a weld leg of about 2.5-mm in length, distance 160 is between about 0.1-mm and 0.3-mm. In an embodiment, the distance 160 is about 0.2-mm. A depth 162 of the groove 101 at the bottom portion 140 may vary depending on the parts being welded. In embodiments having a weld leg of about 2.5-mm in length, the depth 162 is between about 1.0-mm (i.e., about 40% of the weld leg length) and about 1.25-mm (i.e., about 50% of the weld leg length). In one embodiment, the depth 162 is about 1.125-mm (i.e., about 45%). In embodiments, the component 100 has a width 164 of about 3.77-mm, and a width of top surface 150 is about 0.13-mm on either side of the groove 101.

FIG. 5 is a top-down view of an exemplary component 100 having the groove 101. Similar to FIG. 1A, the component 100 includes the base region 400, while the groove 101 includes the fully formed groove in the groove region 200 and the transition region 300 that provides a smooth transition between the groove region 200 and the base region 400. In operation during the vibration welding process, the component 100 slides side-to-side as indicated by the arrow 550 shown in FIG. 5 by an amplitude and frequency configured to generate heat via friction. A gap 170 is provided in the base region 400 between the end of transition region 300 and the corner of the component 100, as depicted in FIG. 5. In embodiments, the gap 170 is between about 1-mm and 5-mm. In certain embodiments, the gap 170 is about 3-mm. The gap 170 is configured to accommodate for an amplitude of 1.5-mm of movement during the vibration welding process. The gap 170 prevents collision between the weld leg 500 and the corner 180, which could result in either the weld leg 500 losing contact with the groove region 200 or a crash between the weld leg 500 with the corner 180 during the vibration welding process.

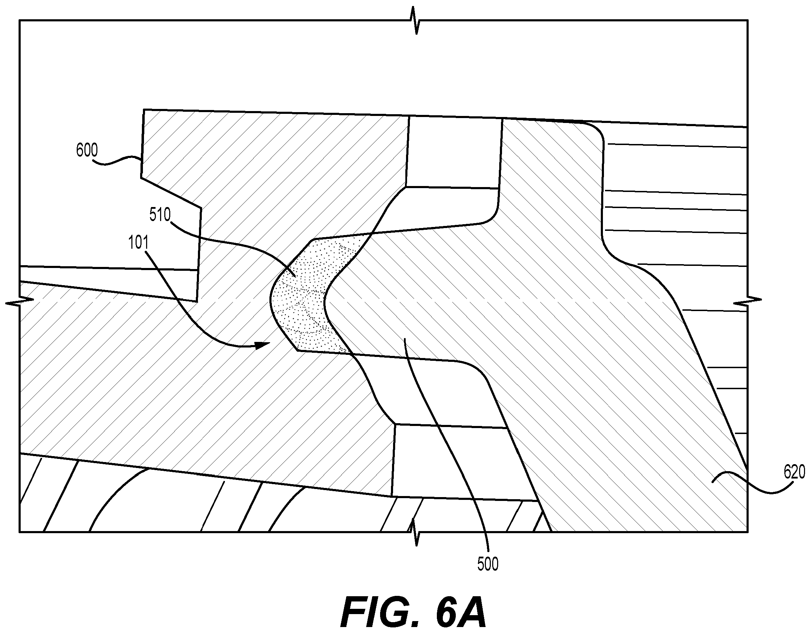

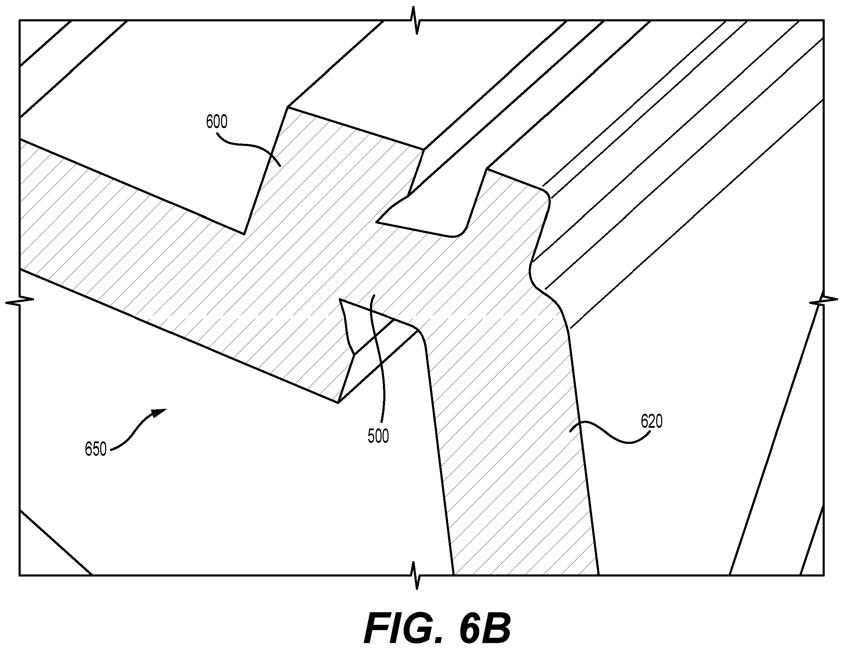

FIG. 6A is a cross-sectional view of a first component 600 having a groove 101 being joined by vibration welding with a second component 620 having a weld leg 500. The sacrificial region 510 is melted inside the groove 101 during vibration welding. When the melted material cools, a bonded assembly 650 is formed as shown in FIG. 6B.

FIG. 6B is a cross-sectional view of a joint region of the bonded assembly 650 following vibration welding of the weld leg 500 into the groove 101. In the bonded assembly 650, a continuous material is formed via the cooled and solidified weld leg 500 that bonds the first component 600 together with the second component 620.

Although the invention has been described with reference to the embodiments illustrated in the attached drawing figures, it is noted that the scope of the invention is only defined in the claims.

## Claims

1. A vibration welding groove system for improved bonding of a first component (100, 600) with a second component (520, 620) via a vibration welding process, the system comprising:
the first component (100, 600), comprising:
a joining surface (150);
a groove region (200), wherein the groove region comprises a groove (101) formed in the joining surface;
a base region (400) lacking the groove in the joining surface; and
a transition region (300) located in the joining surface between the groove region and the base region, wherein the transition region comprises a tapering of the groove (101) to provide a smooth transition from the groove region (200) to the base region (400); and
the second component (520, 620) having a weld leg (500) extending from the second component (520),
wherein the groove (101) of the first component (100, 600) comprises a shape configured to nudge the weld leg (500) towards a center of the groove during joining of the first component with the second component.

2. The system of claim 1, wherein the groove (101) comprises an opening having a width (164) that is larger than a depth (162) of the groove (101).

3. The system of claim 1 or 2, wherein the depth (162) of the groove (101) is greatest at a mid-line of the groove.

4. The system of claim 3, wherein the groove (101) is symmetrical on opposing sides of the mid-line.

5. The system of claim 4, wherein the mid-line of the groove (101) is aligned with a center line of the first component.

6. The system of any one of claims 1 to 5, wherein an outer portion of the groove (101) comprises a depression (144) configured to provide a catchment for receiving the weld leg (500).

7. The system of claim 6, wherein the depression (144) is about 0.2-mm below the joining surface (150).

8. The system of claim 6 or 7, wherein the groove (101) comprises a hump (142) inside the depression (144) towards the center of the groove (101), the hump (142) being configured to nudge the weld leg (500) towards a mid-line of the groove.

9. The system of claim 8, wherein the hump (142) is configured to cause a deflection of the weld leg (500) towards the mid-line of the groove (101).

10. The system of claim 8, wherein the hump (142) is configured to cause a deformation of the weld leg (500), thereby bending the weld leg (500) towards the mid-line of the groove (101).

11. The system of any one of claims 1 to 10, wherein the base region (400) is configured for connection with a vibration source for transferring high frequency vibrations to the first component during the vibration welding process.

12. The system of any one of claims 1 to 11, wherein the groove (101) comprises a contour configured to maintain weld flash within the groove.

13. The system of any one of claims 1 to 12, wherein the groove (101) comprises a contour shaped to receive the weld leg (500) without excessive deformation of the weld leg (500).

14. The system of any one of claims 1 to 13, wherein the groove (101) is configured to direct a misaligned weld leg (500) towards a center of the groove (101) thereby reducing an amount of sacrificial region (510) of the weld leg (500) upon vibrational welding.

15. The system of any one of claims 1 to 14, wherein a depth (162) of the groove (101) is about 1.0-mm to about 1.25-mm below the joining surface (150).

## Patentansprüche

1. Vibrationsschweißnutsystem zur verbesserten Verbindung einer ersten Komponente (100, 600) mit einer zweiten Komponente (520, 620) mittels eines Vibrationsschweißverfahrens, wobei das System umfasst:
die erste Komponente (100, 600), umfassend:
eine Verbindungsfläche (150);
einen Nutbereich (200), wobei der Nutbereich eine in der Verbindungsfläche ausgebildete Nut (101) umfasst,
einen Basisbereich (400) ohne Nut in der Verbindungsfläche; und
einen Übergangsbereich (300), der sich in der Verbindungsfläche zwischen dem Nutbereich und dem Basisbereich befindet, wobei der Übergangsbereich eine Verjüngung der Nut (101) umfasst, um einen glatten Übergang vom Nutbereich (200) zum Basisbereich (400) zu schaffen; und
wobei die zweite Komponente (520, 620) einen Schweißschenkel (500) aufweist, der sich von der zweiten Komponente (520) erstreckt,
wobei die Nut (101) der ersten Komponente (100, 600) eine Form umfasst, die dazu eingerichtet ist, den Schweißschenkel (500) während des Verbindens der ersten Komponente mit der zweiten Komponente in Richtung einer Mitte der Nut zu drücken.

2. System nach Anspruch 1, wobei die Nut (101) eine Öffnung mit einer Breite (164) umfasst, die größer ist als die Tiefe (162) der Nut (101).

3. System nach Anspruch 1 oder 2, wobei die Tiefe (162) der Nut (101) an einer Mittellinie der Nut am größten ist.

4. System nach Anspruch 3, wobei die Nut (101) auf gegenüberliegenden Seiten der Mittellinie symmetrisch ist.

5. System nach Anspruch 4, wobei die Mittellinie der Nut (101) mit einer Mittellinie der ersten Komponente ausgerichtet ist.

6. System nach einem der Ansprüche 1 bis 5, wobei ein äußerer Abschnitt der Nut (101) eine Vertiefung (144) umfasst, die dazu eingerichtet ist, eine Aufnahme für den Schweißschenkel (500) zu bilden.

7. System nach Anspruch 6, wobei die Vertiefung (144) etwa 0,2 mm unterhalb der Verbindungsfläche (150) liegt.

8. System nach Anspruch 6 oder 7, wobei die Nut (101) eine Erhebung (142) innerhalb der Vertiefung (144) in Richtung der Mitte der Nut (101) umfasst, wobei die Erhebung (142) dazu eingerichtet ist, dass sie den Schweißschenkel (500) in Richtung einer Mittellinie der Nut drückt.

9. System nach Anspruch 8, wobei die Erhebung (142) dazu eingerichtet ist, eine Auslenkung des Schweißschenkel (500) in Richtung der Mittellinie der Nut (101) zu bewirken.

10. System nach Anspruch 8, wobei die Erhebung (142) dazu eingerichtet ist, eine Verformung des Schweißschenkel (500) zu bewirken, wodurch der Schweißschenkel (500) in Richtung der Mittellinie der Nut (101) gebogen wird.

11. System nach einem der Ansprüche 1 bis 10, wobei der Basisbereich (400) für die Verbindung mit einer Schwingungsquelle dazu eingerichtet ist, um während des Schwingungs-Schweißprozesses hochfrequente Schwingungen auf die erste Komponente zu übertragen.

12. System nach einem der Ansprüche 1 bis 11, wobei die Nut (101) eine Kontur umfasst, die dazu eingerichtet ist, dass Schweißgrate innerhalb der Nut gehalten werden.

13. System nach einem der Ansprüche 1 bis 12, wobei die Nut (101) eine Kontur umfasst, die so geformt ist, dass sie den Schweißschenkel (500) ohne übermäßige Verformung des Schweißschenkels (500) aufnimmt.

14. System nach einem der Ansprüche 1 bis 13, wobei die Nut (101) dazu eingerichtet ist, einen falsch ausgerichteten Schweißschenkel (500) zur Mitte der Nut (101) hin zu lenken, wodurch die Größe des Opferbereichs (510) des Schweißschenkels (500) beim Vibrationsschweißen verringert wird.

15. System nach einem der Ansprüche 1 bis 14, wobei die Tiefe (162) der Nut (101) etwa 1,0 mm bis etwa 1,25 mm unterhalb der Verbindungsfläche (150) liegt.

## Revendications

1. Système de rainures de soudage par vibration pour améliorer la liaison d'un premier composant (100, 600) avec un deuxième composant (520, 620) via un processus de soudage par vibration, le système comprenant :
le premier composant (100, 600), comprenant :
une surface de jonction (150) ;
une région de rainure (200), dans lequel la région de rainure comprend une rainure (101) formée dans la surface de jonction ;
une région de base (400) dépourvue de rainure dans la surface de jonction ; et
une région de transition (300) située dans la surface de jonction entre la région rainurée et la région de base, dans laquelle la région de transition comprend un rétrécissement de la rainure (101) pour assurer une transition en douceur entre la région rainurée (200) et la région de base (400) ; et
le deuxième composant (520, 620) comportant une patte de soudure (500) s'étendant à partir du deuxième composant (520),
dans lequel la rainure (101) du premier composant (100, 600) comprend une forme configurée pour pousser la patte de soudure (500) vers le centre de la rainure pendant l'assemblage du premier composant avec le deuxième composant.

2. Système selon la revendication 1, dans lequel la rainure (101) comprend une ouverture ayant une largeur (164) qui est supérieure à une profondeur (162) de la rainure (101).

3. Système selon la revendication 1 ou 2, dans lequel la profondeur (162) de la rainure (101) est maximale au niveau de la ligne médiane de la rainure.

4. Système selon la revendication 3, dans lequel la rainure (101) est symétrique sur les côtés opposés de la ligne médiane.

5. Système selon la revendication 4, dans lequel la ligne médiane de la rainure (101) est alignée avec une ligne centrale du premier composant.

6. Système selon l'une quelconque des revendications 1 à 5, dans lequel une partie extérieure de la rainure (101) comprend une dépression (144) configurée pour fournir un bac de réception destiné à recevoir la patte de soudure (500).

7. Système selon la revendication 6, dans lequel le renfoncement (144) se trouve à environ 0,2 mm sous la surface de jonction (150).

8. Système selon la revendication 6 ou 7, dans lequel la rainure (101) comprend une bosse (142) à l'intérieur du renfoncement (144) vers le centre de la rainure (101), la bosse (142) étant configurée pour pousser la patte de soudure (500) vers une ligne médiane de la rainure.

9. Système selon la revendication 8, dans lequel la bosse (142) est configurée pour provoquer une déviation de la branche de soudure (500) vers la ligne médiane de la rainure (101).

10. Système selon la revendication 8, dans lequel la bosse (142) est configurée pour provoquer une déformation de la branche de soudure (500), pliant ainsi la branche de soudure (500) vers la ligne médiane de la rainure (101).

11. Système selon l'une quelconque des revendications 1 à 10, dans lequel la région de base (400) est configurée pour être connectée à une source de vibrations afin de transférer des vibrations à haute fréquence au premier composant pendant le processus de soudage par vibration.

12. Système selon l'une quelconque des revendications 1 à 11, dans lequel la rainure (101) comprend un contour configuré pour maintenir les bavures de soudure à l'intérieur de la rainure.

13. Système selon l'une quelconque des revendications 1 à 12, dans lequel la rainure (101) comprend un contour formé pour recevoir la jambe de soudure (500) sans déformation excessive de la jambe de soudure (500).

14. Système selon l'une quelconque des revendications 1 à 13, dans lequel la rainure (101) est configurée pour diriger une branche de soudure (500) mal alignée vers le centre de la rainure (101), réduisant ainsi la quantité de zone sacrificielle (510) de la branche de soudure (500) lors du soudage par vibration.

15. Système selon l'une quelconque des revendications 1 à 14, dans lequel la profondeur (162) de la rainure (101) est d'environ 1,0 mm à environ 1,25 mm en dessous de la surface de jonction (150).
